# NEUE EUROPÄISCHE PATENTSCHRIFT

(11) **EP 1 291 239 B2**
(45) Veröffentlichungstag und Bekanntmachung des Hinweises auf die Entscheidung über den Einspruch: **17.10.2012**
(45) Hinweis auf die Patenterteilung: 23.01.2008
(21) Anmeldenummer: 02019273.8
(22) Anmeldetag: 28.08.2002
(51) Int. Cl.: B60P 7/08, B60P 7/15

(54) **Anordnung zur Sicherung von Ladung**
Device for securing of load
Dispositif pour la fixation de la charge

(30) Priorität: 05.09.2001 DE 20114727 U
(43) Veröffentlichungstag der Anmeldung: 12.03.2003
(73) Patentinhaber: Fahrzeugwerk Bernard Krone GmbH, 48480 Spelle (DE)
(72) Erfinder: Krone, Bernard, Dr.-Ing. E.h., 48480 Spelle (DE); Evers, Heinz, 49733 Haren (DE)
(74) Vertreter: Busse & Busse

(56) Entgegenhaltungen:
- DE-U1- 9 204 466
- FR-A- 1 291 776
- US-A- 3 051 099
- US-A- 4 127 071
- US-A- 5 011 347
- US-A- 5 954 465

## Beschreibung

Die Erfindung bezieht sich auf eine Anordnung zur Sicherung von Ladung auf Lastfahrzeugen gemäß dem Oberbegriff des Anspruchs 1. Eine derartige Anordnung ist aus der US 3 051 099 A bekannt.

Eine weitere Anordnung zur Sicherung einer Ladung auf einem Lastfahrzeug ist in der DE 92 04 539 U1 wiedergegeben und umfaßt an gegenüberliegenden Bordwänden festklemmbare Planken, welche über zwei an den jeweiligen Enden einer Planke befindlichen Klemmköpfen in Fahrzeuglängsrichtung an den Bordwänden der Ladefläche arretiert werden. Derartige Planken dienen dazu die Ladung in Fahrzeuglängsrichtung gegen Verrutschen auf der Ladefläche des Lastfahrzeuges zu sichern. Dazu werden die Planken so positioniert, daß sie an den vorderen und hinteren Enden der Ladung zur Anlage kommen, so daß sie dann nach einem Festklemmen der Klemmköpfe an den Bordwänden der Ladefläche eine Sicherungsfunktion in Fahrzeuglängsrichtung erfüllen. Bei Ladungen, die sich nicht über die gesamte Fahrzeugbreite erstrecken, ist ein Einsatz dieser festklemmbaren Planken als Ladungssicherung nicht sinnvoll, da ein Verrutschen der Ladung in Fahrzeugquerrichtung dadurch nicht verhindert wird. Desweiteren stellt die Befestigung der Planken über Klemmköpfe an den Bordwänden nur eine begrenzte Sicherung der Ladung gegen Verrutschen in Fahrzeuglängsrichtung dar, weil der Reibschluß zwischen den Klemmköpfen und der Bordwand nur eine begrenzte Haltekraft in Fahrzeuglängsrichtung zuläßt. Ein weiterer Mangel der vorstehend beschriebenen Anordnung zur Sicherung von Ladung ist darin zu sehen, daß die Planken für eine Anbringung von in Fahrzeuglängsrichtung gerichteten Spannmitteln nicht geeignet sind.

Aufgabe der Erfindung ist es daher, eine Anordnung zur Sicherung von Ladung auf einem Lastfahrzeug zu schaffen, welche in einer konstruktiv einfachen und bedienerfreundlichen Art und Weise eine Verzurrung einer Ladung in Fahrzeuglängsrichtung ermöglicht.

Zur Lösung der gestellten Aufgabe zeichnet sich die Anordnung zur Sicherung von Ladung auf einem Lastfahrzeug der vorstehend genannten Art durch die im Anspruch 1 angegebenen Merkmale aus. Hinsichtlich der weiteren Ausgestaltung der Erfindung wird auf die Ansprüche 2 und 3 verwiesen.

Bei einer Anordnung zur Sicherung einer Ladung auf Lastfahrzeugen gemäß der Erfindung ist es vorgesehen, das Ladegut mit Spannmitteln, wie Spanngurte oder dgl., welche sich in Fahrzeuglängsrichtung über das Ladegut erstrecken, gegen Verrutschen sowohl in Fahrzeuglängsals auch in Fahrzeugquerrichtung zu sichern. Dazu sind quer zur Fahrtrichtung ausgerichtete Balken vorgesehen, die sich in Bezug zur Fahrzeuglängsrichtung in nahezu jeder Position an an den Längsaußenseiten einer Ladefläche befindlichen Halterungsmitteln anbringen lassen und die über ihre Länge verteilt mit Zurrlöchern zur Aufnahme von Spannmitteln versehen sind, so daß die zu sichernde Ladung nach dem Niederzurrverfahren in Fahrzeuglängsrichtung mit Spanngurten oder dgl. Spannmitteln überspannt werden kann. Bei dieser auf Reibschluß basierenden Methode der Ladungssicherung kommt der Vorspannkraft in den Spanngurten bzw. der Anlenkung der Spanngurte auf der Ladefläche eine besondere Bedeutung zu, da durch die Größe der Vorspannkraft und des Zurrwinkels (eingeschlossener Winkel zwischen dem Spanngurt und der Ladefläche) die Reibkraft zwischen der Ladung und der Ladefläche bestimmt wird. Ein weiterer Aspekt einer zuverlässigen Ladungssicherung besteht darin, daß die einmal aufgebrachten Vorspannkräfte in den Spanngurten möglichst bis zum Ende des Transportes in der vorgegebenen Größe erhalten bleiben und sich nicht durch kleinste Setzerscheinungen bereits deutliche Reduzierungen der Vorspannkräfte ergeben. Diese beiden Forderungen lassen sich durch die erfindungsgemäße Anordnung zur Sicherung einer Ladung in optimaler Weise verknüpfen. Durch die Auswahl des Abstandes zwischen der Ladung und den der Aufnahme der Spanngurte dienenden Balken, beispielsweise an der vorderen Seite der Ladung mit einem kleinen Abstand und an der hinteren Seite mit einem großen Abstand wird eine zuverlässige Verzurrung erreicht, die sich sowohl durch eine maximale Reibkraft als auch aufgrund der elastischen Dehnfähigkeit der gegenüber einer Querverzurrung längeren Spanngurte durch eine möglichst konstante Vorspannkraft in den Spanngurten auszeichnet. Ein weiterer vorteilhafter Aspekt ergibt sich bei Ladungen, die beispielsweise aus aufeinander geschichteten Spannplatten besteht. Durch die Anwendung einer Verspannung der Ladung mit beispielsweise vier Spanngurten, wobei erste Spanngurte ausgehend von einem ersten Balken unmittelbar vor der Ladung zu einem mit großen Abstand hinter der Ladung befindlichen Balken die Ladung überspannen und zweite Gurte sich von einem unmittelbar hinter der Ladung angeordneten Balken zu einem mit großem Abstand vor der Ladung befestigten Balken erstrecken, wird eine parallelogrammartige Verschiebung einzelner Teile der Ladung , beispielsweise Spanplatten gegeneinander verhindert. Desweiteren können die quer zur Fahrtrichtung ausgerichteten Balken so eingesetzt werden, daß sie einen Anschlag gegen Verrutschen der Ladung in Fahrtrichtung bilden und gleichzeitig Spanngurte aufnehmen, welche die Ladung gegen eine quer zur Fahrtrichtung gerichtete Rutschbewegung sichern.

Die Halterungsmittel an den Längsaußenseiten der Ladefläche, an denen die Balken arretiert werden können sind, als Zurrlochleisten mit über ihre Länge verteilt angebrachten Zurrlöchern ausgebildet, so daß die Zurrlochleisten gleichermaßen für eine Querverzurrung und als Halterungen für die erfindungsgemäßen Balken zur Aufnahme von in Fahrzeuglängsrichtung gerichteten Spanngurten verwendet werden können. Um die quer zur Fahrtrichtung ausgerichteten Balken zur Aufnahme der Spanngurte an der Zurrlochleisten arretieren zu können, sind als Endstücke ausgeführte Befestigungsmittel vorgesehen, die so gestaltet sind, daß beim Verbinden der Befestigungsmittel mit dem Balken eine Arretierung der Endstücke mit den Zurrlochleisten erreichbar ist. Dazu sind die Endstücke mit einem im montierten Zustand zur Ladefläche gerichteten Profilrohrstück zur Aufnahme des aus einem Profilrohr mit rechteckförmigem Querschnitt ausgebildeten Balkens versehen. Zur Verbindung der Endstücke mit den Zurrlochleisten dienen ebenfalls im montierten Zustand zur Ladefläche gerichtete Bolzen, die den gleichen Abstand zueinander aufweisen wie die Zurrlöcher in den Zurrlochleisten. Zur Verriegelung der Endstücke gegenüber dem Balken zur Aufnahme der Spanngurte im montierten Zustand sind vorzugsweise Federriegelverschlüsse vorgesehen.

Eine detaillierte Beschreibung des Gegenstandes der Erfindung erfolgt nun anhand eines Ausführungsbeispieles. In der Zeichnung stellt im einzelnen dar:
- Fig. 1: eine teilweise abgebrochen dargestellte perspektivische Ansicht eines Teiles einer Ladefläche eines Lastfahrzeuges;
- Fig.2: eine perspektivische Ansicht eines erfindungsgemäßen Balkens zur Aufnahme von Spannmitteln;
- Fig.3: eine vergrößerte, abgebrochene Darstellung eines Endbereiches des Balkens gemäß Fig.2;

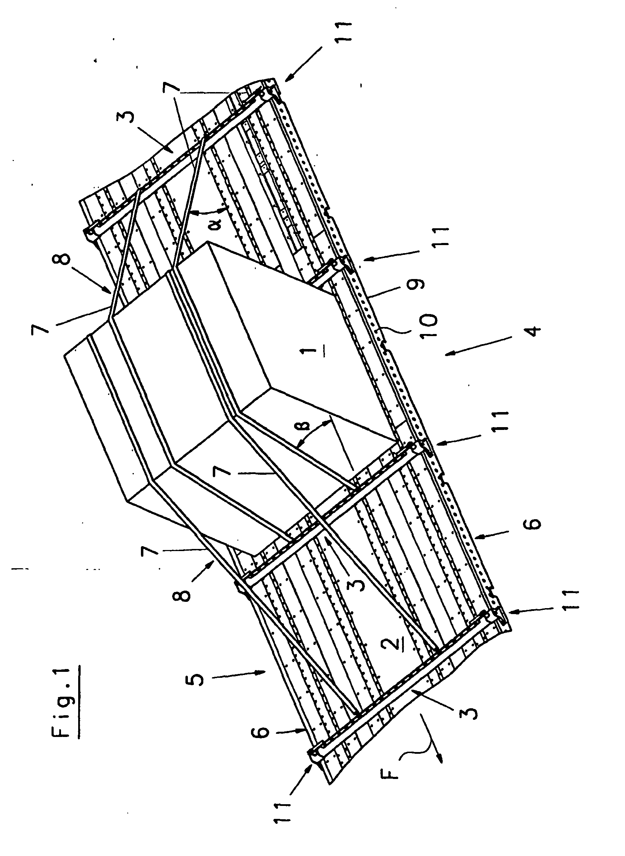

Eine von zahlreichen möglichen Ausführungsformen einer erfindungsgemäßen Anordnung zur Sicherung einer Ladung 1 auf einer Ladefläche 2 eines in Fahrtrichtung F bewegbaren Lastfahrzeuges ist in Fig. 1 wiedergegeben und besteht im wesentlichen aus quer zur Fahrtrichtung F angeordneten Balken 3, welche an an den Längsaußenseiten 4,5 befindlichen Halterungsmitteln 6 der Ladefläche 2 arretierbar sind. Die Balken 3 können dabei so positioniert sein, daß sie an der Ladung 1 zur Anlage kommen (nicht dargestellt) oder wie aus Fig. 1 hervorgeht, zur Aufnahme von Spanngurten 7 oder dgl. Spannmittel 8 vorgesehen sein. Wie aus Fig. 1 weiterhin entnehmbar ist, sind die Halterungsmittel 6 an den Längsaußenseiten 4,5 der Ladefläche 2 als Zurrlochleisten 9 ausgeführt, die über ihre Länge verteilt mit Zurrlöchern 10 versehen sind. Zur Arretierung der Balken 3 an den Zurrlochleisten 9 sind nach der Erfindung Befestigungsmittel 11 vorgesehen, die so gestaltet sind, daß sie im montierten Zustand in die Zurrlöcher 10 hinein greifen und dadurch eine formschlüssige Verbindung mit den Zurrlochleisten 9 herstellen.

Die in Fig. 1 dargestellt Anordnung zur Sicherung einer Ladung 1 auf einer Ladefläche 2 stellt eine vorteilhafte Ausführungsform dar, bei der vier quer zur Fahrtrichtung F ausgerichtete Balken 3 auf der Ladefläche 2 angeordnet sind, wobei zwei Balken 3 einen kleinen Abstand und zwei weiteren Balken 3 einen großen Abstand zur Ladung 1 einnehmen. Wie desweiteren aus Fig. 1 ersichtlich ist, erstrecken sich erste Spanngurte 7 von einem ersten Balken 3, der mit geringem Abstand vor der Ladung 1 angebracht ist, zu einem zweiten Balken 3, welcher in einem großen Abstand hinter der Ladung 1 an den Zurrlochleisten 9 befestigt ist. Zweite Spanngurte 7 dagegen überspannen die Ladung 1 ausgehend von einem mit geringem Abstand hinter der Ladung 1 befindlichen ersten Balken 3 zu einem mit großem Abstand vor der Ladung 1 arretierten zweiten Balken 3. Aus dieser Anordnung ergibt sich zum einen aufgrund des großen Zurrwinkels β eine maximale Reibkraft zwischen der Ladung 1 und der Ladefläche 2 und zum anderen zeichnet sich diese Anbringung der Spanngurte 7 aufgrund der gegenüber der Querverzurrung größeren Gurtlänge durch eine bessere elastische Dehnfähigkeit aus. Daraus folgt, daß die Vorspannkraft selbst bei kleinen Setzerscheinungen der Ladung 1 möglichst konstant bleibt. Besonders geeignet ist die vorstehend beschriebene Anordnung der Spanngurte 7 für Ladungen, welche beispielsweise aus aufeinander geschichteten Spanplatten bestehen und bei denen eine parallelogrammartige Verschiebung der Ladung verhindert werden muß.

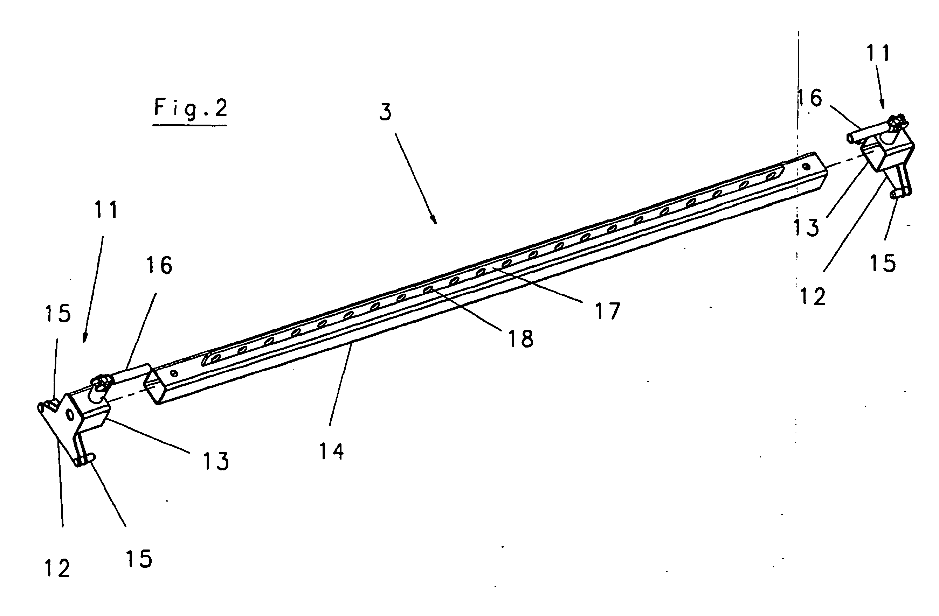

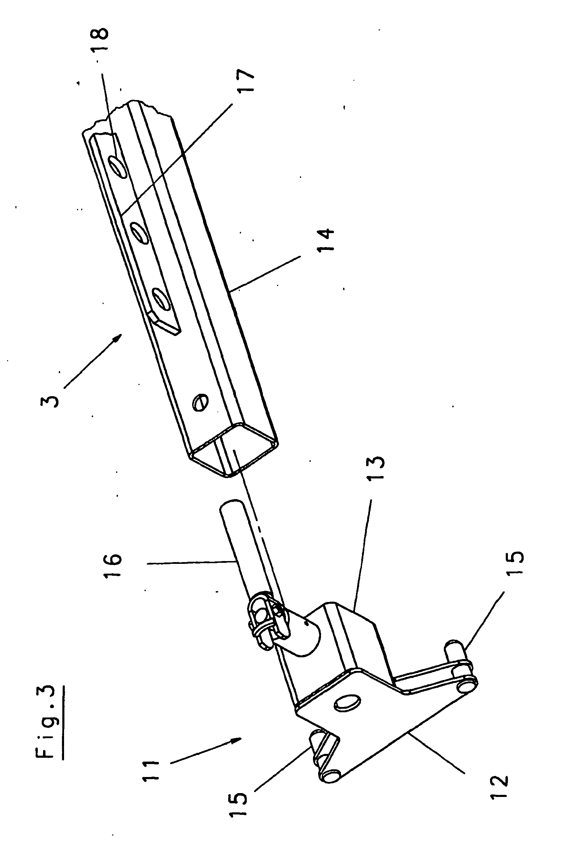

In Fig. 2 und 3 ist eine vorteilhafte Ausführungsform eines Balkens 3 nach der Erfindung darstellt, welcher über die Befestigungsmittel 11 mit den Zurrlochleisten 9 der Ladefläche 2 (Fig.1) verbindbar ist. Um die quer zur Fahrtrichtung F ausgerichteten Balken 3 zur Aufnahme der Spanngurte 7 an den Zurrlochleisten 9 (Fig.1) arretieren zu können, sind als Endstücke 12 ausgeführte Befestigungsmittel 11 vorgesehen, die so gestaltet sind, daß beim Verbinden der Endstücke 12 mit dem Balken 3 eine Arretierung dieser mit den Zurrlochleisten 9 (Fig.1) erreichbar ist. Dazu sind die Endstücke mit einem im montierten Zustand zur Ladefläche 2 gerichteten Profilrohrstück 13 zur Aufnahme des aus einem Profilrohr 14 mit rechteckförmigem Querschnitt ausgebildeten Balkens 3 versehen. Zur Verbindung der Endstücke 12 mit den Zurrlochleisten 9 (Fig. 1) dienen ebenfalls im montierten Zustand zur Ladefläche 2 gerichtete Bolzen 15, die den gleichen Abstand zueinander aufweisen wie die Zurrlöcher 10 in den Zurrlochleisten 9 (Fig.1). Zur Verriegelung der Endstücke 12 gegenüber dem Balken 3 im montierten Zustand sind vorzugsweise Federriegelverschlüsse 16 vorgesehen. Zur Aufnahme und Arretierung der Spanngurte 7 an den Balken 3 sind diese mit einer an der oberen Seite der Balken 3 angebrachten Leiste 17 versehen, welche über ihre Länge verteilt Zurrlöcher 18 aufweist.

## Patentansprüche

1. Anordnung zur Sicherung von Ladung auf Lastfahrzeugen, welche aus zumindest annähernd quer zur Fahrtrichtung (F) ausgerichteten Balken besteht, die jeweils über voneinander unabhängige Befestigungsmittel (11) mit Halterungsmitteln (6) verbindbar sind, und damit in Bezug zur Fahrzeuglängsrichtung in unterschiedlichen Positionen an diesen Halterungsmitteln (6) arretierbar sind, wobei die zumindest annähernd quer zur Fahrtrichtung (F) ausgerichteten Balken (3) über ihre Länge verteilt mit Zurrlöchern (18) zur Aufnahme von in Fahrzeuglängsrichtung wirksamen Spannmitteln (8) versehen sind, **dadurch gekennzeichnet, dass** die Halterungsmittel (6) an den Längsaußenseiten der Ladefläche angeordnet sind und dass die an den Längsaußenseite (4, 5) der Ladefläche (2) angeordneten Halterungsmittel (6) als Zurrlochleisten mit über ihre Länge verteilt angebrachten Zurrlöchern ausgebildet sind, wobei zumindest eines der Befestigungsmittel (11) lösbar mit dem entsprechenden Balken (3) verbunden ist und wobei die Befestigungsmittel so gestaltet sind, dass beim Verbinden der Befestigungsmittel (11) mit einem Balken (3) eine Arretierung der Befestigungsmittel (11) mit den als Zurrlochleisten (9) ausgeführten Halterungsmitteln erreichbar ist und wobei die Befestigungsmittel (11) als Endstücke (12) gestaltet sind, die mit einem im montierten Zustand zur Ladefläche (2) gerichteten Profilrohrstück (13) zur Aufnahme des Balkens (3) und mit im montierten Zustand zur Ladefläche (2) gerichteten Bolzen (15) zur Arretierung der Endstücke (12) in den Zurrlöchern der Zurrlochleiste (9) versehen sind.

2. Anordnung zur Sicherung von Ladung nach Anspruch 1, **dadurch gekennzeichnet, dass** die Balken (3) als Profilrohr (14) mit einem rechteckförmigen Querschnitt ausgeführt sind, an dessen oberer Seite eine Leiste (17) mit den Zurrlöchern (18) angebracht ist.

3. Anordnung zur Sicherung von Ladung nach Anspruch 1 oder 2, **dadurch gekennzeichnet, dass** zur Verriegelung eines Endstückes (12) an dem Balken (3) ein Federriegelverschluss (16) vorgesehen ist.

## Claims

1. Arrangement for securing loads on goods vehicles, which arrangement comprises bars oriented at least approximately transversely to the direction of travel (F), which bars are each connectable to mounting means (6) by means of mutually independent fastening means (11) and are thus able to be held immobile on the said mounting means (6) in different positions in the longitudinal direction of the vehicle, the bars (3) which are oriented at least approximately transversely to the direction of travel (F) being provided with holes (18) for lashings, distributed along their length, to receive clamping means (8) which act in the longitudinal direction of the vehicle, **characterised in that** the mounting means (6) are arranged at the outer longitudinal sides of the load-carrying area and **in that** the mounting means (6) arranged at the outer longitudinal sides (4, 5) of the load-carrying area (2) are in the form of tracks containing holes for lashings which have holes for lashings so made as to be distributed along their length, at least one of the fastening means (11) being detachably connected to the corresponding bar (3), and the fastening means (11) being so designed that, when the fastening means (11) are being connected to a bar (3), it is possible for the fastening means (11) to be caused to be held immobile by the mounting means (6) in the form of tracks (9) containing holes for lashings, and the fastening means (11) being in the form of end-pieces (12) which are provided with a portion of profiled tube (13) to receive the bar (3), which portion of profiled tube (13), in the mounted state, is directed towards the load-carrying area (2), and with pins (15) to hold the end-pieces (12) immobile in the holes for lashings in the track (9) containing holes for lashings, which pins (15), in the mounted state, are directed towards the load-carrying area (2).

2. Arrangement for securing loads according to claim 1, **characterised in that** the bars (3) are produced in the form of tubular profiles (14) of square or rectangular cross-section on whose upper side is mounted a strip (17) containing the holes (18) for lashings.

3. Arrangement for securing loads according to claim 1 or 2, **characterised in that** a closure (16) employing a sprung bolt is provided to lock an end-piece (12) to the bar (3).

## Revendications

1. Dispositif pour la fixation de la charge sur des camions, qui se compose de poutres orientées au moins approximativement transversalement à la direction de déplacement (F), qui peuvent être assemblées à des moyens de maintien (6) chaque fois par des moyens de fixation (6) indépendants l'un de l'autre, et peuvent ainsi être bloquées sur ces moyens de maintien (6) dans différentes positions par rapport à la direction longitudinale du véhicule, dans lequel les poutres (3) orientées au moins approximativement transversalement à la direction de déplacement (F) sont pourvues de trous d'amarrage (18) répartis sur leur longueur pour recevoir des moyens de serrage (8) actifs dans la direction longitudinale du véhicule, **caractérisé en ce que** les moyens de maintien (6) sont disposés sur les longs côtés extérieurs du plateau de chargement et **en ce que** les moyens de maintien (6) disposés sur les longs côtés extérieurs (4, 5) du plateau de chargement (2) sont des barres d'amarrage avec des trous d'amarrage répartis sur leur longueur et où au moins un des moyens de fixation (11) est assemblé de façon détachable à la poutre correspondante (3) et où les moyens de fixation sont conçus de telle manière que, lors de l'assemblage des moyens de fixation (11) avec une poutre (3), on puisse réaliser un blocage des moyens de fixation (11) avec les moyens de maintien constitués par des barres d'amarrage (9) et où les moyens de fixation (11) sont des pièces d'extrémité (12), qui sont pourvues d'une pièce de profilé tubulaire (13) orientée vers le plateau de chargement (2) en position montée pour recevoir la poutre (3) et de boulons (15) orientés vers le plateau de chargement (2) en position montée pour caler les pièces d'extrémité (12) dans les trous d'amarrage de la barre d'amarrage (9).

2. Dispositif pour la fixation de la charge selon la revendication 1, **caractérisé en ce que** les poutres (3) sont des profilés tubulaires (14) présentant une section transversale rectangulaire, dont la face supérieure est munie d'une barre (17) pourvue des trous d'amarrage (18).

3. Dispositif pour la fixation de la charge selon la revendication 1 ou 2, **caractérisé en ce qu'**il est prévu un verrou à ressort (16) pour le verrouillage d'une pièce d'extrémité (12) sur la poutre (3).
